# EUROPÄISCHE PATENTSCHRIFT

(11) **EP 2 974 582 B1**
(45) Veröffentlichungstag und Bekanntmachung des Hinweises auf die Patenterteilung: **20.09.2017**
(21) Anmeldenummer: 15401072.2
(22) Anmeldetag: 09.07.2015
(51) Int. Cl.: A01C 5/06, A01C 7/20, A01C 7/04, A01C 7/08

(54) **LANDWIRTSCHAFTLICHE SÄMASCHINE UND VERFAHREN ZUM SÄEN MIT EINER SOLCHEN LANDWIRTSCHAFTLICHEN SÄMASCHINE**
AGRICULTURAL SEEDING MACHINE AND METHOD FOR SOWING WITH SUCH AN AGRICULTURAL SEEDING MACHINE
SEMOIR AGRICOLE ET PROCEDE POUR SEMER AVEC UN TEL SEMOIR AGRICOLE

(30) Priorität: 17.07.2014 DE 102014110035
(43) Veröffentlichungstag der Anmeldung: 20.01.2016
(73) Patentinhaber: Amazonen-Werke H. Dreyer GmbH & Co. KG, 49205 Hasbergen (DE)
(72) Erfinder: WIEN, Thomas, 28816 Stuhr (DE)

(56) Entgegenhaltungen:
- WO-A1-90/15520
- DE-A1- 3 704 126
- US-B1- 6 332 412

## Beschreibung

Die Erfindung betrifft eine landwirtschaftliche Sämaschine mit den Merkmalen des Oberbegriffs von Anspruch 1 und ein Verfahren zum Säen mit den Merkmalen des Oberbegriffs von Anspruch 11. Eine derartige Sämaschine zeigt die DE 37 04 126 A1. Bei dieser Sämaschine ist ein Furchenformer für die Ablage des Saatgutes und ein Furchenformer für die Einbringung von Dünger in den Boden vorgesehen. Die Furchenformer sind verstellbar am Tragrahmen angeordnet. Die Furchenformer zur Einbringung von Dünger sind unterschiedlich zu den Furchenformern für Saatgut ausgebildet.

Eine weitere Sämaschine ist beispielsweise in der DE 102012108006 A1 offenbart. Bei dieser Sämaschine wird das Saatgut aus einem Vorratsbehälter mittels einer Überdruckdosiereinrichtung vereinzelt und zusammen mit einem Förderluftstrom in eine Saatgutleitung abgegeben. Die Saatgutleitung endet zwischen den Scheiben eines Doppelscheibenschars, mit dem im Boden eine Furche für das Saatgut geöffnet wird. Bei der Ablage werden die einzelnen Saatkörner aus einem nach hinten gekrümmten Ende der Saatgutleitung gegen eine Fangrolle geschossen und in der Furche fixiert. Anschließend wird die Furche mit zwei hinter der Fangrolle angeordneten Andrückrollen wieder verschlossen. In der Druckschrift wird weiter vorgeschlagen, den Förderluftstrom mittels einer Strahlpumpe in der Saatgutleitung zu regulieren, um dadurch die Austrittsgeschwindigkeit des Saatguts an nasse oder trockene Einsatzverhältnissen anzupassen.

Nachteilig dabei ist es, dass die Saatkörner bei schwierigen Einsatzverhältnissen dennoch gelegentlich verrollen und es so zu einer unpräzisen Ablage kommt.

Dadurch werden die Saatkörner nicht mehr gleichmäßig in der Säfurche verteilt.

Aufgabe der vorliegenden Erfindung ist es daher, eine landwirtschaftliche Sämaschine bereitzustellen, mit der bei schwierigen Einsatzverhältnissen eine präzisere Ablage des Saatguts möglich ist. Diese Aufgabe wird mit einer landwirtschaftlichen Sämaschine nach Anspruch 1 und mit einem Verfahren nach Anspruch 11 gelöst. Durch den verstellbaren Furchenformer mit wenigstens zwei Furchenformwerkzeugen können verschiedenartige Furchenformen vor dem Ablegen des Saatguts geformt werden. Folglich ist es möglich, bei trockenen Einsatzverhältnissen eine für das Saatgutfangelement geeignete Furche zu erstellen, in der die einzelnen Saatkörner besonders präzise mit dem Saatgutfangelement abgelegt werden können. Andererseits backen Bodenstücke bei nassen Einsatzbedingungen besonders leicht an dem Saatgutfangelement an, wodurch es dann nicht mehr sinnvoll eingesetzt werden kann. In diesem Fall kann der verstellbare Furchenformer auf das zweite Furchenformwerkzeugen umgestellt werden, so dass die Saatkörner bei direkter Ablage in die Furche ohne das Fangelement besonders wenig verrollen. Dadurch kann das Saatgut sowohl bei trockenen als auch bei nassen Einsatzverhältnissen besonders präzise in der Furche abgelegt werden.

Die landwirtschaftliche Sämaschine kann an einer Zugmaschine, wie beispielsweise einem Traktor angeordnet sein. Die Sämaschine kann einen Rahmen aufweisen, der starr mit der Zugmaschine verbindbar ist. Alternativ kann die Sämaschine einen Rahmen mit Rädern und ein Kupplungselement aufweisen, das mit der Zugmaschine verbindbar ist.

Der Vorratsbehälter kann trichterförmig ausgebildet sein und/oder mit seinem zulaufenden Ende in die Überdruckdosiereinrichtung münden. Ferner kann eine Förderschnecke oder dergleichen vorgesehen sein, um das Saatgut vom Vorratsbehälter in die Überdruckdosiereinrichtung zu fördern.

Die Überdruckdosiereinrichtung kann dazu ausgebildet sein, das Saatgut in einzelne Saatkörner zu vereinzeln. Beispielsweise kann eine Vereinzelungsscheibe mit einer Vielzahl von Bohrungen dafür vorgesehen sein, einzelne Saatkörner aufzunehmen. Die Bohrungen können mit einer Unterdruckeinrichtung, beispielsweise einer Vakuumpumpe verbunden sein. Darüber hinaus kann die Überdruckdosiereinrichtung mit einem Gebläse verbunden sein, um einen Überdruck gegenüber der Umgebung zu erzeugen. Die Überdruckdosiereinrichtung kann dazu ausgebildet sein, die vereinzelten Saatkörner zusammen mit einem Förderluftstrom in die Ablageeinrichtung abzugeben.

Die Ablageeinrichtung ist dazu vorgesehen, das Saatgut durch den Förderluftstrom zu fördern und in einem vorbestimmten Winkel mit einer vorbestimmten Geschwindigkeit in der Furche abzulegen. Die Ablageeinrichtung umfasst wenigstens eine Saatgutleitung in der das Saatgut zusammen mit dem Förderluftstrom geführt wird.

Das Saatgutfangelement kann eine Fangrolle sein, die in Fahrtrichtung hinter der Ablageeinrichtung angeordnet ist und die eine umfängliche Fangfläche umfasst, mit der die Saatkörner in der Furche fixiert werden. Das Andrückelement kann in Fahrtrichtung hinter der Ablageeinrichtung und optional hinter dem Saatgutfangelement angeordnet sein. Das Andrückelement kann walzenartig ausgebildet sein, um die Furche nach dem Ablegen des Saatguts wieder zu verschließen.

Der Säschar kann als Pflugschar oder als Scheibenschar ausgebildet sein. Beispielsweise kann der Säschar als Doppelscheibenschar ausgebildet sein und zwei zueinander V-förmig angestellte Scharscheiben umfassen. Der Säschar kann in Fahrtrichtung vor der Ablageeinrichtung angeordnet sein. Der Säschar kann dazu ausgebildet sein, über klingenartige Kanten und Leitelemente den Boden zu öffnen, so dass sich in Fahrtrichtung hinter dem Säschar eine Furche ausbildet. Der verstellbare Furchenformer kann dreh- oder verschiebbar gelagert sein, so dass in unterschiedlichen Positionen jeweils ein anderes der wenigstens zwei Furchenformwerkzeugen mit dem Boden in Kontakt tritt. Der Furchenformer kann zwischen den beiden Scharscheiben des Doppelscheibenschars angeordnet sein. Die wenigstens zwei Furchenformwerkzeuge können jeweils als Bereiche des Furchenformers ausgebildet sein. Die Furchenformwerkzeuge können quer zur Fahrtrichtung jeweils unterschiedliche Profile aufweisen, um die verschiedenartigen Furchenformen zu formen. Furchengrund kann hier bedeuten, dass dies die vertikal tiefst liegende Stelle der Furche ist. Mit "vertikal" kann hier die Richtung gemeint sein, die auf den Erdmittelpunkt zeigt.

Der verstellbare Furchenformer kann ein verstellbares, optional schwenkbares Tragelement aufweisen, an dem die Furchenformwerkzeuge angeordnet sind. Dadurch kann der Furchenformer besonders einfach so verstellt werden, dass jeweils ein anderes Furchenformwerkzeug mit dem Boden in Kontakt tritt. Das schwenkbare Tragelement kann einstückig mit den Furchenformwerkzeugen ausgebildet sein. Ebenso ist denkbar, dass die Furchenformwerkzeuge auswechselbar in Aufnahmen am schwenkbaren Tragelement angeordnet sind. Ein Furchenformwerkzeug kann zum Formen einer U-förmigen Furchenform und ein anderes Furchenformwerkzeug kann zum Formen einer V-förmigen Furchenform ausgebildet sein. Dadurch kann bei trockenen Einsatzverhältnissen eine U-förmige Furchenform geformt werden, die sich besonders gut im Zusammenwirken mit einer Fangrolle zur Fixierung der Saatkörner eignet. Dagegen kann bei nassen Einsatzverhältnissen eine V-förmige Furchenform geformt werden, um das Saatgut ohne Fangrolle zwischen den Seiten der Furche einzuklemmen, wodurch die Saatkörner fixiert werden. U-förmig kann hier bedeuten, dass die Form zwei im Wesentlichen parallele Seiten aufweist, die am Furchengrund gerade oder bogenförmig verbunden sind. V-förmig kann hier bedeuten, dass die Seiten der Furche am Furchengrund zu einer Spitze zusammenlaufen.

Die Ablageeinrichtung umfasst eine Saatgutleitung mit einer verstellbaren Luftlenkeinrichtung für den Förderluftstrom umfassen. Durch die verstellbare Luftlenkeinrichtung kann die Geschwindigkeit und/oder die Richtung des aus der Saatgutleitung austretenden Saatguts verändert werden, so dass es möglichst ohne Verrollen in der Furche abgelegt wird. Beispielsweise kann bei nassen Einsatzbedingungen das Saatgut unter einem flachen Winkel zum Furchengrund austreten, so dass es auf das Saatgutfangelement prallt und von diesem zuverlässig am Boden fixiert wird. Demgegenüber kann die Luftlenkeinrichtung bei nassen Einsatzverhältnissen derart verstellt werden, dass das Saatgut mit möglichst geringer Geschwindigkeit senkrecht auf den Furchengrund auftrifft, wodurch es auch dann wenig verrollt. Die verstellbare Luftlenkeinrichtung kann ein Luftlenkelemente, ein Weichenelemente und/oder ein Gebläse umfassen.

Die Luftlenkeinrichtung umfasst ein Weichenelement zur wahlweisen Zuführung, Abführung und/oder Sperrung eines Zusatzluftstroms in die bzw. von der Saatgutleitung umfassen. Durch den Zusatzluftstrom in die Saatgutleitung hinein wird der Förderluftstrom gestaut, so dass das Saatgut mit geringerer Geschwindigkeit abgelegt wird. Kann alternativ der Förderluftstrom durch ein Weichenelement aus der Saatgutleitung entweichen, so verlangsamt sich der verbleibende Förderluftstrom in der Leitung ebenfalls und das Saatgut wird auch dann mit geringerer Geschwindigkeit abgelegt. Wird der Zusatzluftstrom dagegen mit dem Weichenelement gesperrt, so wird das Saatgut schneller gefördert und mit höherer Geschwindigkeit abgelegt. Folglich ist es dadurch möglich, besonders einfach die Geschwindigkeit des abgelegten Saatguts zu beeinflussen.

Die Luftlenkeinrichtung kann wechselbare Rohrelemente in der Saatgutleitung umfassen, die sich in einem Querprofil, einem Längsprofil, einem Durchmesser, einer Krümmung und/oder einem Ablagewinkel eines Endabschnitts zum Boden unterscheiden. Durch die wechselbaren Rohrelemente kann der Winkel und/oder die Geschwindigkeit des Saatguts beim Ablegen auf besonders einfach Weise beeinflusst werden. "Wechselbare Rohrelemente" kann hier bedeuten, dass die einzelnen Rohrelemente durch eine Bedienperson manuell gegeneinander austauschbar sind. Ebenso kann dies bedeuten, dass die Rohrelemente an einer oder mehrerer Verfahreinrichtungen angeordnet sind, um sie gegeneinander zu tauschen.

Die verstellbare Luftlenkeinrichtung kann mit dem verstellbaren Furchenformer derart mechanisch gekoppelt sein, dass sie gemeinsam verstellbar sein. Dadurch kann die Sämaschine über einen zentralen Mechanismus auf die unterschiedlichen Einsatzverhältnisse angepasst werden. Dies kann bedeuten, dass die verstellbare Luftlenkeinrichtung starr mit dem verstellbaren Furchenformer verbunden ist. Die Sämaschine kann mit einem manuell verstellbaren Hebel oder mit einer motorischen Verstelleinrichtung ausgebildet sein, um die Luftlenkeinrichtung und/oder den Furchenformer zu verstellen.

Die wechselbaren Rohrelemente der Luftlenkeinrichtung können in den Furchenformer integriert sein. Dadurch kann jedes Rohrelement einem Furchenformwerkzeug zugeordnet sein und zusammen mit diesem gewechselt werden. Dadurch ist es besonders einfach möglich, die Sämaschine auf die Einsatzverhältnisse anzupassen. Die wechselbaren Rohrelemente können in das schwenkbare Tragelement des Furchenformers integriert sein.

Die Überdruckdosiereinrichtung kann dazu ausgebildet sein, das Saatgut wahlweise in zwei verschiedene Saatgutleitungen der Ablageeinrichtung zu dosieren, die sich in einem Querprofil, einem Längsprofil, einem Durchmesser, einer Krümmung und/oder einem Ablagewinkel eines Endabschnitts zum Boden unterscheiden. Dadurch können die zwei Saatgutleitungen jeweils einstückig ausgebildet sein und sind damit besonders einfach aufgebaut. Die Überdruckdosiereinrichtung kann derart steuerbar ausgebildet sein, dass die vereinzelten Saatkörner wahlweise in eine der zwei Saatgutleitungen dosierbar sind. Beispielsweise kann die Überdruckdosiereinrichtung mit einer Weiche oder mit Ventilelementen dazu ausgebildet sein, die Saatkörner wahlweise an unterschiedlichen Positionen von einer Vereinzelungsscheibe in die Saatgutleitungen abzulösen. Je nach Wahl der Saatgutleitung wird dann das Saatgut mit einem unterschiedlichen Winkel und/oder mit einer unterschiedlichen Geschwindigkeit in die Furche abgelegt.

Das Saatgutfangelement kann zur Ablageeinrichtung wahlweise zu oder abschaltbar ausgebildet sein. Dadurch kann das Saatgutfangelement bei trockenen Einsatzverhältnissen zum Fixieren das Saatgut eingesetzt werden. Demgegenüber kann es bei nassen Einsatzverhältnissen aus der Furche herausgehoben werden, um ein anbacken von Bodenstücken zu vermeiden.

Das Saatgutfangelement kann derart mechanisch mit dem verstellbaren Furchenformer gekoppelt sein, dass durch eine Verstellung des Furchenformers das Saatgutfangelement zu- bzw. abgeschaltet wird. Dadurch ist kein separater Verstellmechanismus für das Saatgutfangelement notwendig und die Sämaschine ist besonders einfach aufgebaut.

Darüber hinaus stellt die Erfindung mit dem Anspruch 12 ein Verfahren für eine landwirtschaftliche Sämaschine bereit, wobei eine Furche mit einem Säschar geöffnet wird und wobei mit einer Überdruckdosiereinrichtung Saatgut aus einem Vorratsbehälter zusammen mit einem Förderluftstrom in eine Ablageeinrichtung dosiert wird, dadurch gekennzeichnet, dass in einem Trockenbetrieb für trockene Einsatzverhältnisse ein verstellbarer Furchenformer mit einem ersten Furchenformwerkzeug eine U-förmige Furchenform in der Furche, insbesondere am Furchengrund, formt und ein Saatgutfangelement das von der Ablageeinrichtung abgelegte Saatgut in der Furche fixiert und in einem Nassbetrieb für nasse Einsatzbedingungen das Saatgutfangelement abgeschaltet wird und der verstellbare Furchenformer mit einem zweiten Furchenformwerkzeug eine V-förmige Furchenform in der Furche formt.

Dadurch, dass beim Trockenbetrieb mit dem ersten Furchenformwerkzeug eine U-förmige Furchenform in der Furche geformt und das Saatgut mit dem Saatgutfangelement fixiert wird, können die einzelnen Saatkörner besonders präzise in einer Furche abgelegt werden. Dadurch ist eine besonders gleichmäßige Ausbringung des Saatguts bei trockenen Einsatzverhältnissen möglich. Demgegenüber ist es im Nassbetrieb möglich, mit dem zweiten Furchenformwerkzeug eine V-förmige Furchenform in der Furche zu formen, so dass sich die einzelnen Saatkörner schnell in der Furche verklemmen und dadurch wenig verrollen. Dadurch ist auch bei nassen Einsatzbedingungen eine gleichmäßige Aussaat möglich.

"Trockene Einsatzverhältnisse" kann bedeuten, dass das Saatgutfangelement zum Fixieren der Saatkörner einsetzbar ist, da ein Anbacken von Bodenstücken an dem Saatgutfangelement durch die trockene Beschaffenheit des Bodens im Wesentlichen nicht stattfindet. Ebenso kann dies bedeuten, dass der Boden im Wesentlichen trocken ist. Demgegenüber kann "nasse Einsatzbedingungen" bedeuten, dass der Boden eine derart hohe Feuchtigkeit aufweist, dass eine Aussaat mit einem Saatgutfangelement nicht mehr sinnvoll möglich ist.

Beim Nassbetrieb kann in der Ablageeinrichtung eine Saatgutleitung mittels einer Luftlenkeinrichtung derart verstellt werden, dass die Geschwindigkeit des Förderluftstroms gegenüber dem Trockenbetrieb reduziert ist. Durch die reduzierte Geschwindigkeit des Förderluftstroms wird die Austrittsgeschwindigkeit des Saatguts aus der Ablageeinrichtung vermindert, wodurch beim Nassbetrieb die einzelnen Saatkörner weniger in der Furche verrollen.

Beim Nassbetrieb kann mittels der Ablageeinrichtung ein Ablagewinkel des Saatguts gegenüber dem Trockenbetrieb vergrößert werden. Beim Trockenbetrieb ist der Ablagewinkel gegenüber dem Furchengrund so spitz gewählt, dass die einzelnen Saatkörner gegen das Saatgutfangelement prallen und mit diesem fixiert werden. Demgegenüber ist der Ablagewinkel beim Nassbetrieb größer, also möglichst senkrecht auf den Furchengrund gewählt, damit die Saatkörner beim Auftreffen auf den Furchengrund eine möglichst geringe tangentiale Geschwindigkeitskomponente haben. Dadurch verrollen die einzelnen Saatkörner beim Auftreffen besonders wenig und werden so präziser abgelegt.

Darüber hinaus kann das Verfahren die zuvor in Bezug auf die landwirtschaftliche Sämaschine beschriebenen Merkmale einzelnen oder in beliebigen Kombinationen umfassen.

Weitere Merkmale und Vorteile der Erfindung werden nachfolgend anhand der Ausführungsbeispiele in den Figuren erläutert. Dabei zeigt:
- Fig. 1: ein Ausführungsbeispiel einer landwirtschaftlichen Sämaschine mit einem verstellbaren Furchenformer bei einer ersten Stellung in einer seitlichen Ansicht;
- Fig. 2: die landwirtschaftliche Sämaschine aus der Fig. 1 mit dem Furchenformer bei einer zweiten Stellung in einer seitlichen Ansicht;
- Fig. 3A - 3B: ein weiteres Ausführungsbeispiel des verstellbaren Furchenformers bei einer ersten Stellung für trockene Einsatzbedingungen in einer seitlichen Ansicht;
- Fig. 4A - 4B: der in den Fig. 3A - 3B gezeigte Furchenformer bei einer zweiten Stellung für nasse Einsatzbedingungen in einer seitlichen Ansicht;
- Fig. 5: ein Ausführungsbeispiel einer Überdruckdosiereinrichtung in Verbindung mit einer Ablageeinrichtung mit zwei verschiedenen Saatgutleitungen in einer seitlichen Ansicht;
- Fig. 6: ein Ausführungsbeispiel der Ablageeinrichtung mit einem wechselbaren Rohrelement; und
- Fig. 7: ein Ausführungsbeispiel der Ablageeinrichtung mit einem Weichenelement.

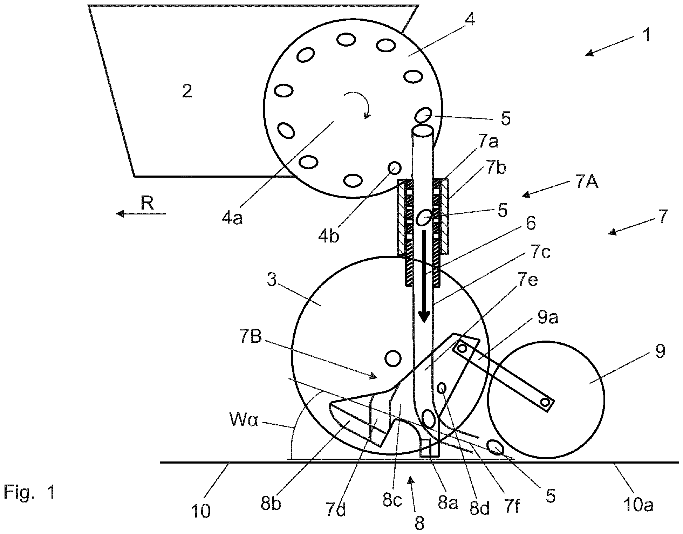

In der Fig. 1 ist ein Ausführungsbeispiel einer landwirtschaftlichen Sämaschine 1 mit einem verstellbaren Furchenformer 8 bei einer ersten Stellung in einer seitlichen Ansicht dargestellt.

Zu sehen ist, dass der Boden 10 mit dem Doppelscheibenschar 3 geöffnet und mit dem Furchenformer 8 eine im Wesentlichen U-förmige Furche 10a zur Ablage des Saatguts 5 geformt wird. Der verstellbare Furchenformer 8 befindet sich hier in einer ersten Stellung, bei dem das Furchenformwerkzeug 8a für eine U-förmige Furchenform mit dem Boden in Kontakt gebracht wird.

Weiterhin ist zu sehen, dass das Saatgut 5 aus einem Vorratsbehälter 2 mit der Überdruckdosiereinrichtung 4 zusammen mit dem Förderluftstrom 6 in die Ablageeinrichtung 7 gefördert wird. Die einzelnen Saatkörner 5 werden durch die Saatgutleitung 7c mit dem Förderluftstrom 6 pneumatisch gefördert und am Endabschnitt 7 unter dem Ablagewinkel W_{α} gegen die Fangrolle 9 geschossen. Dadurch werden die Saatkörner 5 mit der Fangrolle 9 am Furchengrund der Furche 10a fixiert und so präzise abgelegt.

Die Überdruckdosiereinrichtung 4 ist mit der Vereinzelungsscheibe 4a ausgebildet, die seitlich am Umfang mehrere Bohrungen 4b aufweist, die etwas kleiner als die Saatkörner 5 sind. Über einen an die Bohrungen 4b angelegten Unterdruck werden einzelne Saatkörner 5 aus dem Vorratsbehälter 2 aufgenommen und zur Eintrittsöffnung der Saatgutleitung 7c transportiert. Dort wird der Unterdruck unterbrochen, so dass die Saatkörner einzeln und mit regelmäßigen Abständen in die Saatgutleitung 7c fallen.

Die Ablageeinrichtung 7 umfasst hier die beiden Luftlenkeinrichtung 7A und 7B. Die erste Luftlenkeinrichtung 7A wird aus einer inneren Hülse 7a mit siebartigen Löchern und einer geschlossenen äußeren Hülse 7b gebildet. In der in der Fig. 1 dargestellten Stellung verdeckt die äußere Hülse 7b die Löcher der inneren Hülse 7a, so dass der Förderluftstrom 6 nicht in die Umgebung gelangen kann. Dadurch werden die Saatkörner 5 mit maximaler Geschwindigkeit nach unten zum Endabschnitt 7f gefördert.

Die zweite Luftlenkeinrichtung 7B weist zwei wechselbare Rohrelemente 7d und 7e auf, die in den Furchenformer 8 integriert sind. Das Rohrelement 7e ist nach hinten gekrümmt, so dass das Saatgut 5 unter einem möglichst spitzen Ablagewinkel W_{α} gegen die Fangrolle 9 prallt. Dadurch können die Saatkörner 5 besonders präzise mit der Fangrolle 9 am Furchengrund eingeklemmt und fixiert werden.

Darüber hinaus ist zu sehen, dass der Furchenformer 8 ein schwenkbares Tragelement 8c aufweist, an dem die Furchenformwerkzeuge 8a und 8b angeordnet sind. Des Weiteren sind die beiden Rohrelemente 7d und 7e der Luftlenkeinrichtung 7B einstückig in dem schwenkbaren Tragelement 8c des Furchenformers 8 als Bohrungen ausgebildet. Dadurch können diese gemeinsam mit den Furchenformwerkzeugen 8a und 8b geschwenkt werden.

In der Fig. 1 ist in der ersten Stellung das Rohrelement 7e dem Furchenformwerkzeug 8a zugeordnet. Dadurch wird einerseits die U-förmige Furche 10a geformt und andererseits ergibt sich der besonders spitze Ablagewinkel W_{α}.

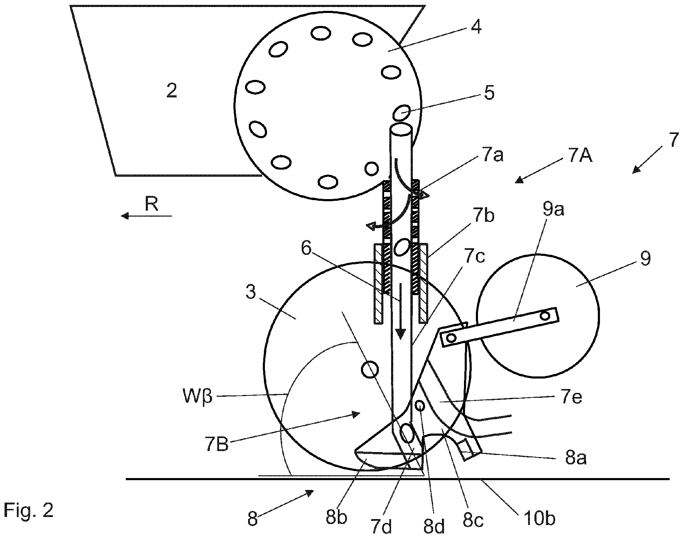

Dagegen ist in der Fig. 2 die landwirtschaftliche Sämaschine 1 aus der Fig. 1 gezeigt, wobei sich der Furchenformer 8 in der zweiten Stellung befindet. Zu sehen ist, dass der Furchenformer 8 in der Fig. 2 im Vergleich zur Fig. 1 gegen den Uhrzeigersinn geschwenkt ist, so dass der in Fahrtrichtung R hinten liegende Teil nach oben und der vorne liegende Teil nach unten geschwenkt ist. Dadurch wird das zweite Furchenformwerkzeug 8b nach unten in den Boden hingedrückt, so dass eine V-förmige Furche 10b geformt wird. Darüber hinaus ist nun im unteren Bereich die Saatgutleitung 7c mit dem Rohrelement 7d verbunden, das einen größeren Ablagewinkel W_{β} gegenüber dem Furchengrund aufweist.

Ferner ist zu sehen, dass das erste Furchenformwerkzeug 8a so weit nach oben geschwenkt ist, dass es nicht mit dem Boden in Kontakt tritt. Ebenso ist auch das Rohrelement 7e nicht mehr mit der Saatgutleitung 7c verbunden. Zu sehen ist auch, dass die Fangrolle 9 über den Träger 9a mit dem schwenkbaren Tragelement 8c des Furchenformers 8 verbunden ist. Dadurch wird bei der Schwenkbewegung des Furchenformers 8 die Fangrolle 9 nach oben verstellt, so dass sie nicht mehr in Kontakt mit der dem Boden bzw. der Furche kommt. Darüber hinaus ist bei der ersten verstellbaren Luftlenkeinrichtung 7A die äußere Hülse 7b nach unten verschoben ist, so dass ein Teil des Förderluftstroms 6 aus dem Inneren der Saatgutleitung 7c nach außen entweichen kann. Dadurch wird der Förderluftstrom 6 so weit abgebremst, dass die Saatkörner 5 eine möglichst geringe Geschwindigkeit aufweisen. Denkbar ist hier, dass die Saatkörner 5 lediglich durch die Schwerkraft nach unten fallen.

Durch die beiden verstellten Luftlenkeinrichtung 7A und 7B sowie das Furchenformwerkzeug 8b wird eine V-förmige Furche 10b gebildet, in die die Saatkörner 5 mit möglichst geringer Geschwindigkeit hineinfallen und sich dort verkeilen. Dadurch verrollen diese besonders wenig und es wird eine präzise Ablage der Saatkörner 5 bei nassen Einsatzbedingungen ermöglicht.

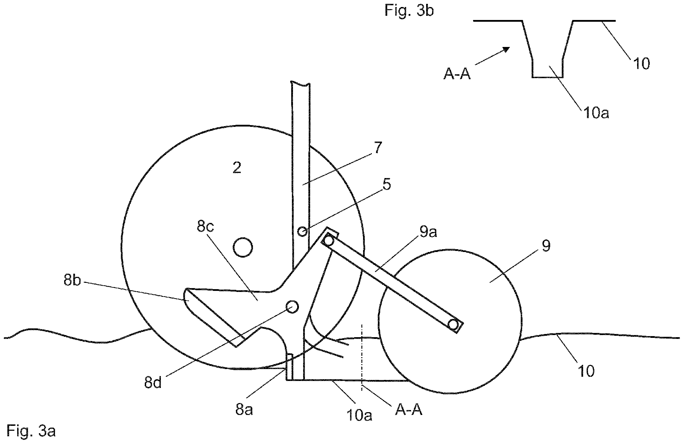

In den Fig. 3A und 3B ist ein weiteres Ausführungsbeispiel eines verstellbaren Furchenformers 8 bei einer ersten Stellung für trockene Einsatzverhältnisse in einer seitlichen Ansicht dargestellt. Der Vorratsbehälter und die Überdruckdosiereinrichtung sind hier nicht im Einzelnen dargestellt und entsprechen denen der Fig. 1 und 2. Das Ausführungsbeispiel in den Fig. 3A und 3B unterscheidet sich im Wesentlichen von den Fig. 1 und 2 dadurch, dass die Ablageeinrichtung 7 ohne verstellbare Luftlenkeinrichtung ausgebildet ist.

Zu sehen ist der verstellbare Furchenformer 8 mit den beiden Furchenformwerkzeugen 8a und 8b, der zwischen den Scheiben des Doppelscheibenschars 2 angeordnet ist. Das schwenkbare Tragelement 8c ist um die Achse 8d schwenkbar, so dass wahlweise eines der beiden Furchenformwerkzeuge 8a bzw. 8b mit dem Boden in Kontakt tritt, um entweder eine U-förmige oder eine V-förmige Furche zu erzeugen. Hinter dem Furchenformer 8 ist an dem Träger 9a die Fangrolle 9 angeordnet, die zur Fixierung der Saatkörner 5 in der Furche 10a dient. Der Furchenformer 8 und die Fangrolle 9 sind dadurch bei einer Schwenkbewegung des Tragelements 8c gemeinsam verstellbar.

Des Weiteren ist die Ablageeinrichtung 7 zu sehen, die hier als feststehende Saatgutleitung ausgebildet ist. Es ist jedoch auch denkbar, dass die hier dargestellte Ablageeinrichtung 7 eine Luftlenkeinrichtung 7A, 7C und/oder 7D der Fig. 1, 2, 5 bzw. 6 aufweist.

Beim Trockenbetrieb wird der verstellbare Furchenformer 8 in die hier dargestellte Position eingestellt, so dass das Furchenformwerkzeug 8a zum Formen einer U-förmigen Furchenform mit dem Boden in Kontakt tritt. Dadurch erhält die Furche 10a die in der Fig. 3B als Schnittansicht A-A dargestellte Furchenform mit dem U-förmigen Furchengrund 10c. Anschließend wird das Saatgut 5 durch die Ablageeinrichtung 7 in der Furche 10a abgelegt und mit der Fangrolle 9 fixiert. Im Anschluss an die Fangrolle 9 kann noch ein Andrückelement (hier nicht dargestellt) vorgesehen sein, um den Boden 10 wieder zu verschließen.

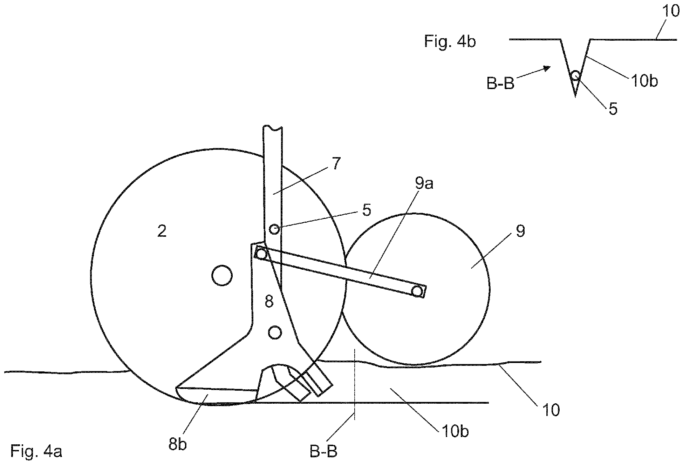

In den Fig. 4A - 4B ist der verstellbare Furchenformer 8 nach dem Ausführungsbeispiel in den Fig. 3A und 3B bei einer zweiten Stellung für nasse Einsatzverhältnisse in einer Seitenansicht dargestellt. Hierbei wird der verstellbare Furchenformer 8 gegen den Uhrzeigersinn so geschwenkt, dass das zweite Furchenformwerkzeug 8b zum Formen einer V-förmigen Furchenform mit dem Boden 10 in Kontakt tritt. Gleichsam wird die Fangrolle 9 durch den Träger 9a nach oben geschwenkt und deaktiviert. Dadurch erhält die Furche 10b die in der Schnittdarstellung B-B der Fig. 4B dargestellte Furchenform mit dem V-förmigen Furchengrund 10d. Zu sehen ist, dass sich das Saatgut 5 nach der Ablage zwischen den zwei V-förmigen Seiten der Furche 10b verklemmt, so dass es unmittelbar fixiert wird und nicht mehr verrollt. Dadurch ist die Ablage bei nassen Einsatzverhältnissen besonders präzise.

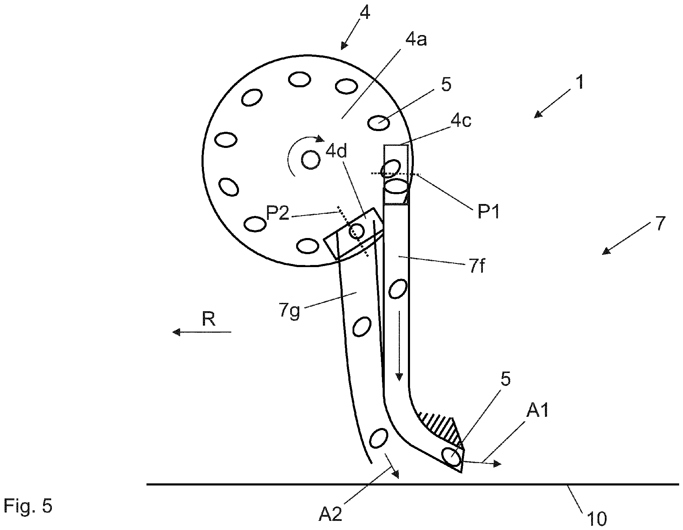

In der Fig. 5 ist ein weiteres Ausführungsbeispiel der Ablageeinrichtung 7 in einer Seitenansicht dargestellt. Zu sehen ist, dass die Überdruckdosiereinrichtung 4 die beiden Ventilelemente
4c und 4d aufweist, mit denen das Saatgut 5 von der Scheibe 4a wahlweise an der Position P₁ oder P₂ abgelöst werden kann. Dadurch ist es möglich, die einzelnen Saatkörner 5 wahlweise in die erste oder zweite Saatgutleitung 7f bzw. 7g einzuleiten. Die beiden Ventilelemente
4c und 4d können auch als schwenkbare Ventil- und/oder Verschlusselemente ausgebildet sein.

Die erste Saatgutleitung 7f für trockene Einsatzbedingungen weist einen kleinen Querschnitt und eine Krümmung in Fahrtrichtung R nach hinten auf. Dadurch werden die Saatkörner 5 in Richtung A₁ nach hinten gegen die hier nicht dargestellte Fangrolle geschossen. Demgegenüber weist die zweite Saatgutleitung 7g für nasse Einsatzbedingungen einen großen Querschnitt und eine geringere Krümmung nach hinten auf, so dass die Saatkörner 5 mit geringer Geschwindigkeit und einem großen Winkel gegenüber dem Boden 10 in der Richtung A₂ abgelegt werden.

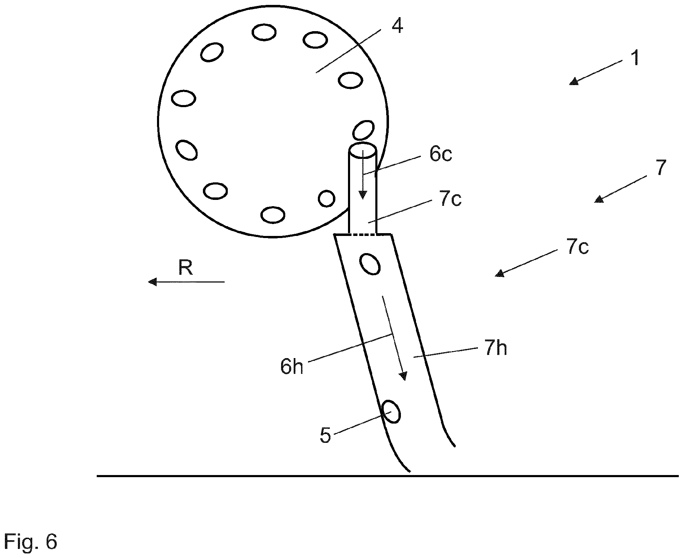

In der Fig. 6 ist ein weiteres Ausführungsbeispiel einer Ablageeinrichtung 7 dargestellt. Zu sehen ist das obere Rohrelemente 7c, das am unteren Ende über eine Kupplung mit dem unteren Rohrelemente 7h gekoppelt ist. Durch die Kupplung kann das untere Rohrelement 7h gegen ein beliebig anderes Rohrelement ausgetauscht werden. Zu sehen ist, dass das untere Rohrelement 7h einen großen Querschnitt aufweist, wodurch der untere Förderluftstrom 6h gegenüber dem oberen Förderluftstrom 6c langsamer ist. Dadurch hat das Saatgut 5 im unteren Rohrelement 7h eine besonders geringe Geschwindigkeit. Wird nun das untere Rohrelement 7h in ein anderes mit geringem Querschnitt ausgetauscht, so erhöht sich die Ablagegeschwindigkeit entsprechend. Ebenfalls ist denkbar, dass sich dadurch die Krümmung am Endabschnitt verändern lässt.

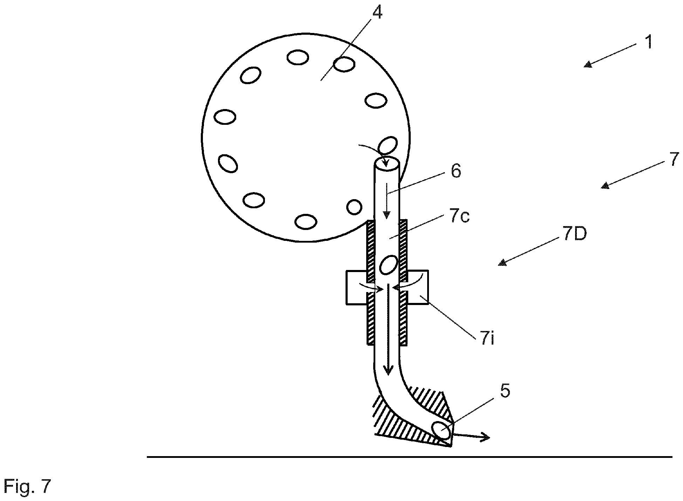

In der Fig. 7 ist ein weiteres Ausführungsbeispiel der Ablageeinrichtung 7 in einer seitlichen Ansicht dargestellt. Zu sehen ist, dass die verstellbare Luftlenkeinrichtung 7D eine Einrichtung 7i zum seitlichen zusätzlichen einspeisen eines Luftstroms in die Saatgutleitung 7c aufweist. Hierdurch wird der eintretende Förderluftstrom 6 zurückgestaut, wodurch die Beschleunigungsstrecke für das Saatgut 5 vermindert wird. Durch die zusätzliche Einspeisung des Luftstroms wird die Ablagegeschwindigkeit des Saatguts 5 vermindert, so dass im Nassbetrieb die Saatkörner 5 weniger verrollen. Demgegenüber wird beim Trockenbetrieb kein Zusatzluftstrom eingespeist, so dass der Förderluftstrom 6 mit hoher Geschwindigkeit durch die Saatgutleitung 7c fließt. Dadurch kann das Saatgut mit hoher Geschwindigkeit gegen eine hier nicht dargestellte Fangrolle geschossen werden.

Es ist denkbar, dass die Luftlenkeinrichtung 7D beim Ausführungsbeispiel in der Fig. 1 anstelle der Luftlenkeinrichtung 7A eingesetzt wird.

Die landwirtschaftlichen Sämaschinen nach den Ausführungsbeispielen der Fig. 1 - 7 werden wie folgt eingesetzt:
In einem Trockenbetrieb für trockene Einsatzverhältnisse wird der verstellbare Furchenformer 8 mit dem ersten Furchenformwerkzeug 8a so eingestellt, dass eine U-förmige Furchenform in der Furche 10a entsteht. Dadurch kann das von der Ablageeinrichtung 7 abgelegte Saatgut 5 besonders gut in der Furche 10a fixiert werden.

Im Nassbetrieb wird dagegen der Furchenformer 8 so verstellt, dass das zweite Furchenformwerkzeug 8b eine V-förmige Furchenform in der Furche 10b formt. Dadurch werden die einzelnen Saatkörner 5 im Nassbetrieb in der V-förmigen Furche eingeklemmt und können nicht mehr verrollen. Dadurch ist auch im Nassbetrieb eine besonders präzise Ablage möglich.

Darüber hinaus kann der Förderluftstrom 6 im Nassbetrieb gegenüber dem Trockenbetrieb reduziert und der Ablagewinkel vergrößert sein. Dadurch gelingt bei den jeweiligen Einsatzbedingungen eine besonders präzise Ablage des Saatguts 5.

Es versteht sich, dass in den zuvor beschriebenen Ausführungsbeispielen genannte Merkmale nicht auf diese speziellen Kombinationen beschränkt und auch in beliebigen anderen Kombinationen möglich sind.

## Patentansprüche

1. Landwirtschaftliche Sämaschine (1) mit einem Vorratsbehälter (2) für Saatgut (5), einem Säschar (3) zum Öffnen einer Furche (10a, 10b), einer Überdruckdosiereinrichtung (4) zur Dosierung des Saatguts (5) aus dem Vorratsbehälter (2) mit einem Förderluftstrom (6) in eine Ablageeinrichtung (7) und mit einem Saatgutfang- und/oder Andrückelement (9) zur Fixierung des von der Ablageeinrichtung (7) abgelegten Staatguts (5) in der Furche (10a, 10b), wobei ein verstellbarer Furchenformer (8) mit wenigstens zwei Furchenformwerkzeugen (8a, 8b) dazu ausgebildet ist, verschiedenartige Furchenformen, insbesondere am Furchengrund (10c, 10d), in der Furche (10a, 10b) zu formen **dadurch gekennzeichnet, dass** die Ablageeinrichtung (7) eine Saatgutleitung (7c) mit einer verstellbaren Luftlenkeinrichtung (7A - 7D) für den Förderluftstrom umfasst, und dass die Luftlenkeinrichtung (7A, 7D) ein Weichenelement (7a-b, 7i) zur wahlweisen Zuführung, Abführung und/oder Sperrung eines Zusatzluftstroms in die bzw. von der Saatgutleitung (7c) umfasst.

2. Landwirtschaftliche Sämaschine (1) nach Anspruch 1, wobei der verstellbare Furchenformer (8) ein verstellbares, optional schwenkbares Tragelement (8c) aufweist, an dem die Furchenformwerkzeuge (8a, 8b) angeordnet sind.

3. Landwirtschaftliche Sämaschine (1) nach Anspruch 1 oder 2, wobei ein Furchenformwerkzeug (8a) zum Formen einer U-förmigen Furchenform und ein anderes Furchenformwerkzeug (8b) zum Formen einer V-förmigen Furchenform ausgebildet sind.

4. Landwirtschaftliche Sämaschine (1) nach Anspruch 1, wobei die Luftlenkeinrichtung (7B, 7C) wechselbare Rohrelemente (7d-e, 7h) in der Saatgutleitung (7c) umfasst, die sich in einem Querprofil, einem Längsprofil, einem Durchmesser, einer Krümmung und/oder einem Ablagewinkel (W_{α}, W_{β}) eines Endabschnitts zum Boden unterscheiden.

5. Landwirtschaftliche Sämaschine (1) nach wenigstens einem der Ansprüche 1 oder 4, wobei die verstellbare Luftlenkeinrichtung (7B) mit dem verstellbaren Furchenformer (8) derart mechanisch gekoppelt ist, dass sie gemeinsam verstellbar sind.

6. Landwirtschaftliche Sämaschine (1) nach Anspruch 4 oder 5, wobei die wechselbaren Rohrelemente (7d-e) der Luftlenkeinrichtung (7B) in den Furchenformer (8) integriert sind.

7. Landwirtschaftliche Sämaschine (1) nach wenigstens einem der Ansprüche 1 - 3, wobei die Überdruckdosiereinrichtung (4) dazu ausgebildet ist, das Saatgut (5) wahlweise in zwei verschiedene Saatgutleitungen (7g, 7f) der Ablageeinrichtung (7) zu dosieren, die sich in einem Querprofil, einem Längsprofil, einem Durchmesser, einer Krümmung und/oder einem Ablagewinkel (W_{α}, W_{β}) eines Endabschnitts zum Boden unterscheiden.

8. Landwirtschaftliche Sämaschine (1) nach wenigstens einem der vorangegangenen Ansprüche, wobei die Überdruckdosiereinrichtung (4) mit zwei zugeordneten Ventilelementen (4c, 4d) vorgesehen ist, wobei mit den beiden Ventilelementen (4c, 4d) das Saatgut (5) von einer Vereinzelungsscheibe (4a) wahlweise an zwei verschiedenen Positionen (P₁ oder P₂) ablösbar ist, so dass die abgelösten Saatkörner (5) wahlweise in eine ersten oder eine zweiten Saatgutgutleitung (7f, 7g) einleitbar ist.

9. Landwirtschaftliche Sämaschine (1) nach wenigstens einem der vorangegangenen Ansprüche, wobei das Saatgutfangelement (9) zur Ablageeinrichtung (7) wahlweise zu- oder abschaltbar ausgebildet ist.

10. Landwirtschaftliche Sämaschine (1) nach Anspruch 9 wobei das Saatgutfangelement (9) derart mechanisch mit dem verstellbaren Furchenformer (8) gekoppelt ist, dass durch eine Verstellung des Furchenformers (8) das Saatgutfangelement (9) zu- bzw. abgeschaltet wird.

11. Verfahren zum Säen mit einer landwirtschaftlichen Sämaschine (1) nach Anspruch 1,
wobei eine Furche (10a, 10b) mit einem Säschar (3) geöffnet wird;
wobei mit einer Überdruckdosiereinrichtung (4) Saatgut (5) aus einem Vorratsbehälter (2) zusammen mit einem Förderluftstrom (6) in eine Ablageeinrichtung (7) dosiert wird,
**dadurch gekennzeichnet, dass**
in einem Trockenbetrieb für trockene Einsatzverhältnisse ein verstellbarer Furchenformer (8) mit einem ersten Furchenformwerkzeug (8a) eine U-förmige Furchenform in der Furche (10a), insbesondere am Furchengrund (10c, 10d), formt und ein Saatgutfangelement (9) das von der Ablageeinrichtung (7) abgelegte Saatgut (5) in der Furche fixiert; und
in einem Nassbetrieb für nasse Einsatzbedingungen das Saatgutfangelement (9) abgeschaltet wird und der verstellbare Furchenformer (8) mit einem zweiten Furchenformwerkzeug (8b) eine V-förmige Furchenform in der Furche (10b) formt.

12. Verfahren nach Anspruch 11, wobei beim Nassbetrieb in der Ablageeinrichtung (7) eine Saatgutleitung (7c) mittels einer Luftlenkeinrichtung (7A - 7D) derart verstellt wird, dass die Geschwindigkeit des Förderluftstroms (6) gegenüber dem Trockenbetrieb reduziert ist.

13. Verfahren nach Anspruch 11 oder 12, wobei beim Nassbetrieb mittels der Ablageeinrichtung (7) ein Ablagewinkel (W_{α}, W_{β}) des Saatguts (5) gegenüber dem Trockenbetrieb vergrößert wird.

## Claims

1. Agricultural seeding machine (1) with a storage container (2) for seed (5), a sowing coulter (3) for opening a furrow (10a, 10b), a pressurized metering device (4) for metering the seed (5) out of the storage container (2) with a conveying airflow (6) into a depositing device (7), and with a seed-collecting and/or press-on element (9) for fixing the seed (5) deposited by the depositing device (7) in the furrow (10a, 10b), wherein an adjustable furrow former (8) with at least two furrow forming tools (8a, 8b) is designed to form various furrow shapes, in particular on the furrow bottom (10c, 10d), in the furrow (10a, 10b), **characterized in that** the depositing device (7) comprises a seed line (7c) with an adjustable air-deflecting device (7A-7D) for the conveying airflow, and **in that** the air-deflecting device (7A-7D) comprises a switch element (7a-b, 7i) for the selective supplying, removing and/or blocking of an additional airflow into or from the seed line (7c).

2. Agricultural seeding machine (1) according to Claim 1, wherein the adjustable furrow former (8) has an adjustable, optionally pivotable supporting element (8c) on which the furrow forming tools (8a, 8b) are arranged.

3. Agricultural seeding machine (1) according to Claim 1 or 2, wherein one furrow forming tool (8a) is designed for forming a U-shaped furrow shape and another furrow forming tool (8b) is designed for forming a V-shaped furrow shape.

4. Agricultural seeding machine (1) according to Claim 1, wherein the air-deflecting device (7B, 7C) comprises exchangeable tubular elements (7d-e, 7h) in the seed line (7c), said tubular elements differing in a transverse profile, a longitudinal profile, a diameter, a curvature and/or a depositing angle (W_{α}, W_{β}) of an end portion with respect to the ground.

5. Agricultural seeding machine (1) according to at least one of Claims 1 or 4, wherein the adjustable air-deflecting device (7B) is mechanically coupled to the adjustable furrow former (8) in such a manner that they are adjustable together.

6. Agricultural seeding machine (1) according to Claim 4 or 5, wherein the exchangeable tubular elements (7d-e) of the air-deflecting device (7B) are integrated in the furrow former (8).

7. Agricultural seeding machine (1) according to at least one of Claims 1-3, wherein the pressurized metering device (4) is designed to meter the seed (5) selectively into two different seed lines (7g, 7f) of the depositing device (7), said seed lines differing in a transverse profile, a longitudinal profile, a diameter, a curvature and/or a depositing angle (W_{α}, W_{β}) of an end portion with respect to the ground.

8. Agricultural seeding machine (1) according to at least one of the preceding claims, wherein the pressurized metering device (4) is provided with two assigned valve elements (4c, 4d), wherein, with the two valve elements (4c, 4d), the seed (5) is selectively detachable at two different positions (P₁ or P₂) by a singulating disc (4a) such that the detached seed grains (5) can be selectively conducted into a first or a second seed line (7f, 7g).

9. Agricultural seeding machine (1) according to at least one of the preceding claims, wherein the seed-collecting element (9) is designed to be selectively switchable on or off with respect to the depositing device (7).

10. Agricultural seeding machine (1) according to Claim 9, wherein the seed-collecting element (9) is mechanically coupled to the adjustable furrow former (8) in such a manner that the seed-collecting element (9) is switched on or off by an adjustment of the furrow former (8).

11. Method for sowing with an agricultural seeding machine (1) according to Claim 1,
wherein a furrow (10a, 10b) is opened with a sowing coulter (3);
wherein, with a pressurized metering device (4), seed (5) is metered from a storage container (2) together with a conveying airflow (6) into a depositing device (7),
**characterized in that**,
in a dry mode for dry use conditions, an adjustable furrow former (8) forms a U-shaped furrow shape in the furrow (10a), in particular on the furrow bottom (10c, 10d), with a first furrow forming tool (8a) and a seed-collecting element (9) fixes the seed (5) deposited by the depositing device (7) in the furrow; and
in a wet mode for wet use conditions, the seed-collecting element (9) is switched off and the adjustable furrow former (8) forms a V-shaped furrow shape in the furrow (10b) with a second furrow forming tool (8b).

12. Method according to Claim 11, wherein, in the wet mode, a seed line (7c) is adjusted in the depositing device (7) by means of an air-deflecting device (7A-7D) in such a manner that the speed of the conveying airflow (6) is reduced in relation to the dry mode.

13. Method according to Claim 11 or 12, wherein, in the wet mode, a depositing angle (W_{α}, W_{β}) of the seed (5) is increased in relation to the dry mode by means of the depositing device (7).

## Revendications

1. Semoir agricole (1) présentant un récipient de réserve (2) pour la semence (5), un soc (3) de semis qui ouvre un sillon (10a, 10b), un dispositif (4) de dosage en surpression qui à l'aide d'un écoulement (6) d'air de transport injecte dans un dispositif de placement (7) les semences (5) provenant du récipient de réserve (2) et un élément (9) de reprise de semences et/ou de poussée qui fixe dans le sillon (10a, 10b) les semences (5) déposées par le dispositif de placement (7),
un formateur ajustable (8) de sillon présentant au moins deux outils (8a, 8b) de formation de sillon étant configuré pour réaliser des formes différentes dans les sillons (10a, 10b), en particulier au fond (10c, 10d) des sillons,
**caractérisé en ce que**
le dispositif de placement (7) comporte un conduit (7c) à semences doté d'un dispositif (7A-7D) ajustable de guidage d'air pour l'écoulement d'air de refoulement et
**en ce que** le dispositif (7A, 7D) de guidage d'air comporte un élément d'aiguillage (7a-b, 7i) qui permet sélectivement d'amener, d'évacuer et/ou de bloquer un écoulement supplémentaire d'air dans ou depuis le conduit (7c) à semences.

2. Semoir agricole (1) selon la revendication 1, dans lequel le formateur ajustable (8) de sillon présente un élément de support (8c) ajustable, facultativement pivotant, sur lequel sont disposés les outils (8a, 8b) de formation de sillon.

3. Semoir agricole (1) selon les revendications 1 ou 2, dans lequel un outil (8a) de formation de sillon est configuré pour former un sillon en U et un autre outil (8b) de formation de sillon est configuré pour former un sillon en V.

4. Semoir agricole (1) selon la revendication 1, dans lequel le dispositif (7B, 7C) de guidage d'air comporte des éléments tubulaires (7d-e, 7h) remplaçables dans le conduit (7c) de semences, qui se distinguent par leur profil transversal, leur profil longitudinal, leur diamètre, leur courbure et/ou l'angle d'écartement (W_{α}, W_{β}) de leur partie d'extrémité par rapport au sol.

5. Semoir agricole (1) selon au moins l'une des revendications 1 à 4, dans lequel le dispositif ajustable (7B) de guidage d'air est accouplé mécaniquement au formateur ajustable (8) de sillon de telle sorte qu'il puisse être ajusté conjointement.

6. Semoir agricole (1) selon les revendications 4 ou 5, dans lequel les éléments tubulaires remplaçables (7d-e) du dispositif (7B) de guidage d'air sont intégrés dans le formateur (8) de sillon.

7. Semoir agricole (1) selon au moins l'une des revendications 1 à 3, dans lequel le dispositif (4) de dosage en surpression est configuré pour doser les semences (5) sélectivement dans deux conduits différents (7g, 7f) à semences du dispositif de pose (7), qui se distinguent par leur profil transversal, leur profil longitudinal, leur diamètre, leur courbure et/ou l'angle d'écartement (W_{α}, W_{β}) de leur partie d'extrémité par rapport au sol.

8. Semoir agricole (1) selon au moins l'une des revendications précédentes, dans lequel le dispositif (4) de dosage en surpression est associé à des éléments de soupape (4c, 4d), les deux éléments de soupape (4c, 4d) permettant de déposer les semences (5) depuis un disque (4a) séparant les semences sélectivement en deux positions (P₁ ou P₂) de telle sorte que les grains de semences (5) détachés puisse être guidés sélectivement dans un premier ou un deuxième conduit (7f, 7g) de semences.

9. Semoir agricole (1) selon au moins l'une des revendications dans lequel l'élément (9) de reprise de semences est configuré de manière à pouvoir être branché ou débranché sélectivement du dispositif de pose (7).

10. Semoir agricole (1) selon la revendication 9, dans lequel l'élément (9) de reprise de semences est accouplé mécaniquement au formateur ajustable (8) de sillon de telle sorte qu'un déplacement du formateur (8) de sillon permette de brancher ou de débrancher l'élément (9) de reprise de semences.

11. Procédé pour semer à l'aide d'un semoir agricole (1) selon la revendication 1, dans lequel un sillon (10a, 10b) est ouvert à l'aide d'un soc (3) de semis, des semences (5) provenant d'un récipient de réserve (2) sont injectées dans un dispositif de pose (7) par un dispositif (4) de dosage en surpression en même temps qu'un écoulement (6) d'air de refoulement, **caractérisé en ce que**
dans un fonctionnement à sec, dans des conditions d'utilisation sèches, un formateur ajustable (8) de sillon forme à l'aide d'un premier outil (8a) de formation de sillon la forme d'un U dans le sillon (10a), en particulier sur le fond (10c, 10d) du sillon, et un élément (9) de reprise de semences fixe dans le sillon les semences (5) déposées par le dispositif de pose (7) ; et
en fonctionnement en conditions humides, dans des conditions d'utilisation humides, l'élément (9) de reprise de semences est débranché et le formateur ajustable (8) de sillon forme dans le sillon (10b) la forme d'un V à l'aide d'un deuxième outil (8b) de formation de sillon.

12. Procédé selon la revendication 11, dans lequel en fonctionnement humide, le dispositif de pose (7) déplace un conduit (7c) à semences au moyen d'un dispositif (7A-7D) de guidage d'air de telle sorte que la vitesse de l'écoulement (6) d'air de transport soit plus basse qu'en fonctionnement à sec.

13. Procédé selon les revendications 11 ou 12, dans lequel en fonctionnement humide, un angle de pose (W_{α}, W_{β}) des semences (5) formé au moyen du dispositif de pose (7) est plus grand qu'en fonctionnement à sec.
